# EUROPEAN PATENT APPLICATION

(11) **EP 4 654 625 A1**
(43) Date of publication of application: **26.11.2025**
(21) Application number: 24810148.7
(22) Date of filing: 25.04.2024
(51) Int. Cl.: H04W 4/029

(54) **LOCATION AREA UPDATE METHOD AND APPARATUS, METHOD AND APPARATUS FOR TRIGGERING LOCATION AREA UPDATE, METHOD AND APPARATUS FOR PAGING LOCATION AREA UPDATE, AND DEVICE AND STORAGE MEDIUM**

(30) Priority: 24.05.2023 CN 202310595660
(71) Applicant: ZTE CORPORATION, Shenzhen, Guangdong 518057 (CN)
(72) Inventor: GAO, Minggang, Shenzhen, Guangdong 518057 (CN); DING, Xuemei, Shenzhen, Guangdong 518057 (CN); XU, Ying, Shenzhen, Guangdong 518057 (CN)
(74) Representative: Canzler & Bergmeier Patentanwälte Partnerschaft mbB
(86) International application number: PCT/CN2024/089723
(87) International publication number: WO 2024/239901

(57) **Abstract**

Disclosed in the present disclosure are a location area update method and apparatus, a method and apparatus for triggering a location area update, a method and apparatus for paging a location area update, and a device and a storage medium. The method for triggering a location area update comprises: acquiring from a location area mapping relationship a tag value of a target cell, a tag value of the current cell and a location area list of the current cell, wherein the target cell is a cell where a terminal resides when being in an idle state most recently, and the location area mapping relationship comprises a mapping relationship between a location area list of a cell and a tag value of the cell; acquiring a general location area list, which is stored corresponding to the target cell, wherein the general location area list is obtained by means of performing detection when the terminal is in the idle state most recently; comparing the general location area list with the location area list of the current cell, and comparing the tag value of the current cell with the tag value of the target cell, so as to obtain comparison results; and according to the comparison results, determining whether to trigger a location area update procedure.

## Description

### CROSS REFERENCE TO RELATED APPLICATIONS

The present disclosure claims the priority to Chinese Patent Application No. 202310595660.8 entitled "LOCATION AREA UPDATE METHOD AND APPARATUS, METHOD AND APPARATUS FOR TRIGGERING LOCATION AREA UPDATE, METHOD AND APPARATUS FOR PAGING, AND DEVICE AND STORAGE MEDIUM" and filed on May 24, 2023, the contents of which are incorporated herein by reference in their entirety.

### TECHNICAL FIELD

The present disclosure relates to the technical field of communications, and in particular, to a location area update method and apparatus, a method and apparatus for triggering a location area update, a paging method and apparatus, a device, and a storage medium.

### BACKGROUND

With the evolution of the 5th Generation Mobile Communication Technology (5G) and the development of the future 6th Generation Mobile Network Technology (6G), satellite links are adopted as a Non-Terrestrial Network (NTN) in the 5G Advanced technology, and are taken as the most important technique in the next generation communications.

In the future 6G, the terrestrial mobile communication technology and the satellite links are combined to form a space-air-ground integrated communication system, which is a great evolution of current network coverage. The current terrestrial mobile communication technology can merely cover less than 40% of the land area of the world, and for the oceans occupying most of the land area, terrestrial base stations cannot be established for covering the oceans. In order to expand the coverage area of the mobile communication technology in the future, it is necessary to adopt the space-based technology, i.e., the satellite technology (including low-orbit satellites or medium-orbit satellites) as an important coverage measure.

Unlike a conventional base station built at a fixed location, a Low Earth Orbit Satellite (LEO or LEOS for short) in the satellite links is moving, and a cell coverage area also changes along with movements of the LEO. That is, when a terminal does not move, cell reselection may be performed after a period of time, and even a location area update procedure may be triggered. This may frequently wake up the terminal which is in an idle state to perform a location area update including establishment of Radio Resource Control (RRC) connection, establishment of Non-Access Stratum (NAS) connection, and registration of information related to receiving and sending positions, which not only consumes power of the terminal, but also causes a heavy signaling overheads burden to a communication network.

In view of the above, how to reduce unnecessary location area update procedures, reduce power consumption of the terminal, and reduce signaling overheads of the communication network is a problem to be solved by a mobile base station (e.g., the LEO) for non-terrestrial communications.

### SUMMARY

The present disclosure provides a location area update method and apparatus, a method and apparatus for triggering a location area update, a paging method and apparatus, a device, and a storage medium, so as to reduce frequency of location area updates and reduce signaling overheads caused by the location area updates.

The present disclosure provides a method for triggering a location area update applied to a terminal, a non-terrestrial network providing communication services for the terminal, and the method including: acquiring a tag value of a target cell, a tag value of a current cell, and a location area list of the current cell from a location area mapping relationship, wherein the target cell is a cell on which the terminal resides when the terminal is in an idle state last time, and the location area mapping relationship includes a mapping relationship between location area lists and tag values of cells; acquiring a total location area list stored corresponding to the target cell, wherein the total location area list is acquired through detecting when the terminal is in the idle state last time; obtaining a comparison result by comparing the total location area list with the location area list of the current cell, and comparing the tag value of the current cell with the tag value of the target cell; and determining whether to trigger a location area update procedure based on the comparison result.

The present disclosure further provides a location area update method applied to a non-terrestrial network, the non-terrestrial network providing communication services for a terminal, and the method including: acquiring a location area mapping relationship, wherein the location area mapping relationship includes a mapping relationship between location area lists and tag values of cells; and transmitting the location area mapping relationship to the terminal.

The present disclosure further provides a paging method applied to a non-terrestrial network, the non-terrestrial network providing communication services for a terminal, and the method including: acquiring a tag value corresponding to a cell providing services for the terminal from a location area mapping relationship, wherein the location area mapping relationship includes a mapping relationship between location area lists and tag values of cells; acquiring at least one target cell mapped to the same tag value as the cell providing services from the location area mapping relationship; and issuing a paging signaling for the terminal to the at least one target cell.

The present disclosure further provides an apparatus for triggering a location area update applied to a terminal, a non-terrestrial network providing communication services for the terminal, and the apparatus including: a first acquisition module configured to acquire a tag value of a target cell, a tag value of a current cell, and a location area list of the current cell from a location area mapping relationship, wherein the target cell is a cell on which the terminal resides when the terminal is in an idle state last time, and the location area mapping relationship includes a mapping relationship between location area lists and tag values of cells; a second acquisition module configured to acquire a total location area list stored corresponding to the target cell, wherein the total location area list is acquired through detecting when the terminal is in the idle state last time; a comparison module configured to obtain a comparison result by comparing the total location area list with the location area list of the current cell, and comparing the tag value of the current cell with the tag value of the target cell; and a triggering module configured to determine whether to trigger a location area update procedure based on the comparison result.

The present disclosure further provides a location area update apparatus applied to a non-terrestrial network providing communication services for a terminal, including: an acquisition module configured to acquire a location area mapping relationship, wherein the location area mapping relationship includes a mapping relationship between location area lists and tag values of cells; and a transmission module configured to transmit the location area mapping relationship to the terminal.

The present disclosure further provides a paging apparatus applied to a non-terrestrial network providing communication services for a terminal, including: a first acquisition module configured to acquire a tag value corresponding to a cell providing services for the terminal from a location area mapping relationship, wherein the location area mapping relationship includes a mapping relationship between location area lists and tag values of cells; a second acquisition module configured to acquire at least one target cell mapped to the same tag value as the cell providing services from the location area mapping relationship; and a paging module configured to issue a paging signaling for the terminal to the at least one target cell.

The present disclosure further provides an electronic device, including: one or more processors; and a memory having stored thereon one or more programs which, when executed by the one or more processors, cause the one or more processors to perform the method for triggering the location area update according to the present disclosure, or perform the location area update method according to the present disclosure, or perform the paging method according to the present disclosure.
The present disclosure further provides a computer readable medium having stored thereon a computer program which, when executed by a processor, causes the processor to perform the method for triggering the location area update according to the present disclosure, or perform the location area update method according to the present disclosure, or perform the paging method according to the present disclosure.

### BRIEF DESCRIPTION OF DRAWINGS

FIG. 1 is a schematic diagram of an architecture adopting satellites as a non-terrestrial link in a space-air-ground integrated communication system according to an embodiment of the present disclosure;
FIG. 2 is a schematic diagram illustrating inconsistency between a cell coverage area and a broadcast location area due to a cell not updating System Information Block (SIB) parameter;
FIG. 3 is a schematic diagram illustrating consistency between cell coverage areas and broadcast location areas by updating SIB parameter of a cell in time according to an embodiment of the present disclosure;
FIG. 4 is a flowchart illustrating a method for triggering a location area update applied to a terminal according to an embodiment of the present disclosure;
FIG. 5 is a flowchart illustrating a method for triggering a location area update applied to a terminal according to an embodiment of the present disclosure;
FIG. 6 is a flowchart illustrating a location area update method applied to a satellite according to an embodiment of the present disclosure;
FIG. 7 is a flowchart illustrating a terminal paging method applied to a satellite according to an embodiment of the present disclosure;
FIG. 8 is a flowchart illustrating a terminal paging method applied to a satellite according to an embodiment of the present disclosure;
FIG. 9 is a schematic diagram illustrating a position of a terminal during a time T1 according to an embodiment of the present disclosure;
FIG. 10 is a schematic diagram illustrating a position of a terminal during a time T2 according to an embodiment of the present disclosure;
FIG. 11 is a schematic structural diagram of an apparatus for triggering a location area update according to an embodiment of the present disclosure;
FIG. 12 is a schematic structural diagram of a location area update apparatus according to an embodiment of the present disclosure;
FIG. 13 is a schematic structural diagram of a paging apparatus according to an embodiment of the present disclosure; and
FIG. 14 is a schematic structural diagram of an electronic device according to an embodiment of the present disclosure.

### DETAIL DESCRIPTION OF EMBODIMENTS

The specific implementations of the present disclosure are described in detail below with reference to the drawings. It should be understood that the specific implementations described herein are merely intended to describe and explain the present disclosure, rather than limiting the present disclosure.

The term "and/or" used herein includes any and all combinations of one or more associated listed items.

The terms used herein are merely used to describe the specific embodiments, and are not intended to limit the present disclosure. As used herein, "a" and "the" which indicate a singular form are intended to include a plural form, unless expressly stated in the context.

The term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that the terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

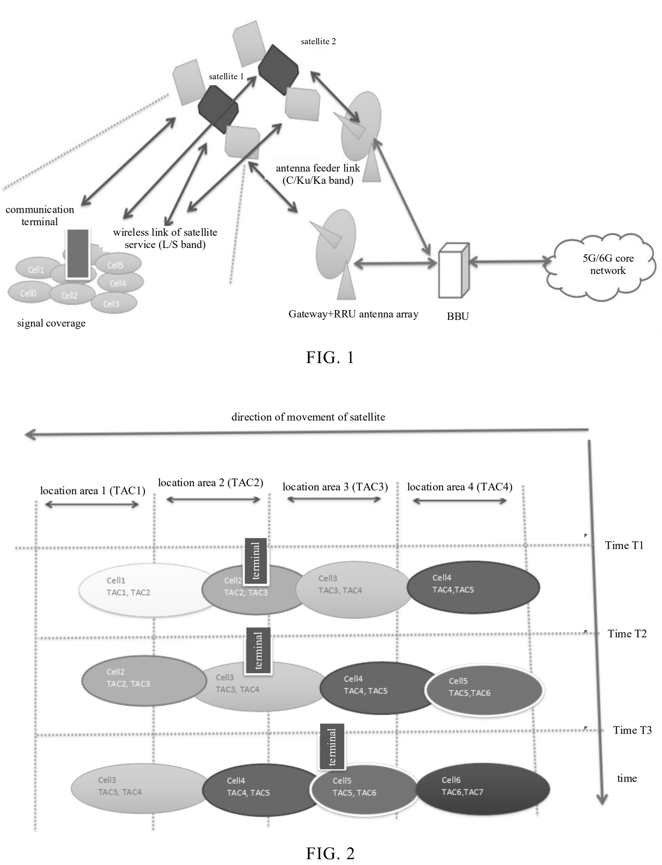

FIG. 1 is a schematic diagram of an architecture adopting satellites as a non-terrestrial link in a space-air-ground integrated communication system.

The embodiments of the present disclosure are applicable to the architecture shown in FIG. 1. In the architecture, a satellite antenna array for terrestrial communication transmits communication signals to each satellite along an uplink direction using a C band, a Ku band, or a Ka band. Each satellite forwards the communication signals to a target area using an L band and an S band. A terminal supporting the L/S band can acquire the communication signals forwarded by the satellites, so that the terminal can be covered by the signals.

A cell coverage area changes continuously with the movement of the satellites. At different times, no matter a cell actively and dynamically modifies coverage area information or keeps the coverage area information unchanged, the problem that the terminal is subjected to unnecessary location area changes exists.

FIG. 2 is a schematic diagram illustrating inconsistency between a cell coverage area and a broadcast location area due to a cell not updating SIB parameter.

In FIG. 2, a location area of a terminal at a time T1 and a location area of the terminal at a time T2 do not vary substantially, but since a cell update change is not instantaneously completed, there is a state in which a location area of a cell is not updated in time. In the state of not updating the location area of the cell in time, the terminal is changed from being covered by Cell 2 to being covered by Cell 3 along with the movement of a satellite. Since the location areas actually covered by the cells are not updated in time, the terminal believes that a change in the location areas occurs, thereby triggering a location area update procedure. If the location area is not updated, it is possible that the terminal cannot be paged successfully.

If each cell can update the SIB parameter in time to keep broadcast location areas of the cell consistent with actual coverage areas of the cell, the above problem can be avoided, but the terminal may trigger the location area update frequently.

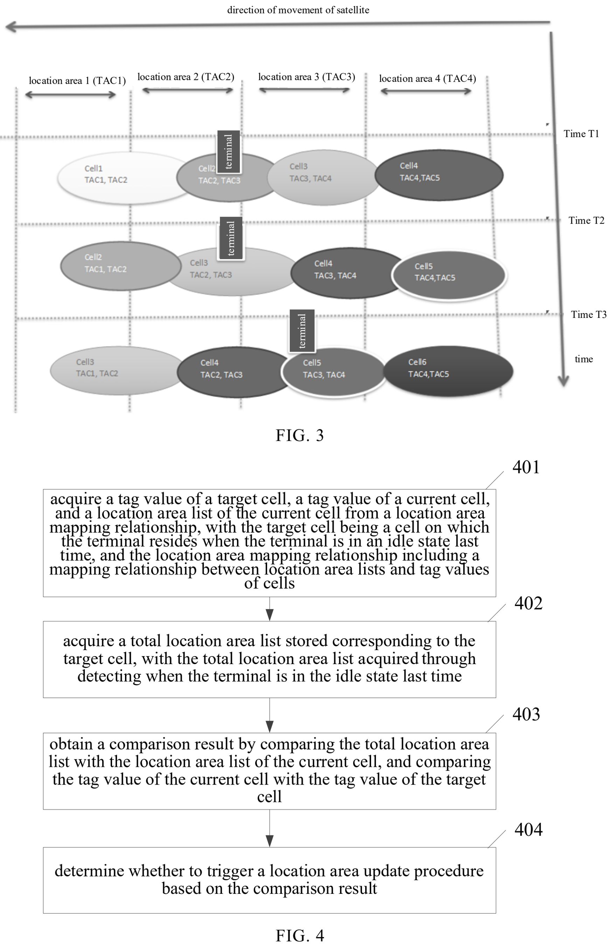

FIG. 3 is a schematic diagram illustrating consistency between cell coverage areas and broadcast location areas by updating SIB parameter of a cell in time.

As shown in FIG. 3, since the location areas of the cells are updated in time before the time T2, the location area of the terminal is not changed even though the terminal is changed from being covered by Cell 2 to being covered by Cell 3 with the movement of the satellite.

As is found, reference is mostly made to a solution in the 3rd Generation Partnership Project (3GPP) at present for a triggering condition of the location area update procedure in the related technology, that is, as long as the terminal detects that the location area is changed and a new location area is not in a location area list of the current cell, the terminal needs to switch from the idle state to a connected state and perform the location area update procedure. This solution is reasonable for a base station with a fixed location, but for the satellite (also called a base station satellite) which functions as a base station and has a moving location, this solution may cause the terminal to perform the location area update frequently, causing huge and useless consumption of both the terminal and the base station satellite.

Based on the above analysis, the embodiments of the present disclosure provide a method for triggering a location area update, a location area update method, and a paging method, so as to balance frequency of location area updates and paging success rate.

An embodiment of the present disclosure provides a method for triggering a location area update, which is applied to a terminal, and an NTN such as a satellite provides communication services for the terminal.

FIG. 4 is a flowchart illustrating a method for triggering a location area update at a terminal side, which includes the following operations 401 to 404.

At operation 401, a tag value of a target cell, a tag value of a current cell, and a location area list of the current cell are acquired from a location area mapping relationship, with the target cell being a cell on which the terminal resides when the terminal is in an idle state last time, and the location area mapping relationship including a mapping relationship between location area lists and tag values of cells.

In some embodiments, before acquiring the tag value of the target cell, the tag value of the current cell, and the location area list of the current cell from the location area mapping relationship (i.e., operation 401), the location area mapping relationship issued by the NTN after a latest location area update is acquired.

In some embodiments, when the terminal performs cell reselection, the terminal acquires the tag value of the target cell, the tag value of the current cell, and the location area list of the current cell from the location area mapping relationship.

In some embodiments, location area lists of at least two cells are mapped to a same tag value in the location area mapping relationship.

It should be noted that it is not necessary to map the location area lists of at least two cells to the same tag value, and the mapping relationship between the location area lists and the tag values may be configured based on scenario requirements. With the location area lists of the at least two cells mapped to the same tag value in the location area mapping relationship, the tag value can be kept unchanged when the cell is changed due to the cell reselection (i.e., cell handover) at the terminal.

In an exemplary embodiment, the cell reselection may be triggered by a movement of the NTN such as a satellite or a movement of the terminal. Specifically, the movement of the NTN or the terminal causes a change of the cell signal quality monitored by the terminal, the terminal continuously monitors the signal quality of neighbor cells and the signal quality of the current cell when the terminal is in an idle/inactive state, so as to reside on a cell with higher priority or better channel quality. When a neighbor cell meets a certain reselection decision criterion, the terminal performs the cell reselection, so as to be connected to the reselected cell and reside on the reselected cell.

At operation 402, a total location area list stored corresponding to the target cell is acquired, with the total location area list acquired through detecting when the terminal is in the idle state last time.

In some embodiments, the total location area list includes a location area list of the target cell which is detected when the terminal is in the idle state last time and a location area list of each detectable neighbor cell. The target cell is the cell on which the terminal resides when the terminal is in the idle state last time.

At operation 403, the total location area list is compared with the location area list of the current cell, and the tag value of the current cell is compared with the tag value of the target cell to obtain a comparison result.

The comparison result includes information about whether there is an overlapped location area between the total location area list and the location area list of the current cell, and further includes information about whether the tag value of the current cell is the same as that of the target cell.

At operation 404, whether to trigger a location area update procedure is determined based on the comparison result.

Different comparison results correspond to different ways of determining whether to trigger the location area update procedure, which includes, but is not limited to, a plurality of cases listed below.

Case 1: the comparison result is that there is no overlapped location area between the total location area list of the target cell and the location area list of the current cell and the tag value of the current cell is the same as that of the target cell, then the location area update procedure is not triggered.

Under the condition that the tag values do not vary, even if the cell reselection occurs and there is no overlapped location area between the location area list of the cell before reselection and the location area list of the cell after reselection, the location area update procedure does not need to be triggered, which reduces the frequency of location area updates.

Case 2: the comparison result is that there is no overlapped location area between the total location area list of the target cell and the location area list of the current cell and the tag value of the current cell is the same as that of the target cell, and a moving distance value of the terminal from a target time when the terminal is in the idle state last time to a current time exceeds a critical distance value, then the location area update procedure is triggered.

In a case where the cell reselection occurs and there is no overlapped location area between the location area list of the cell before reselection and the location area list of the cell after reselection, if the moving distance value of the terminal from the target time when the terminal is in the idle state last time to the current time exceeds the critical distance value, in order to ensure communication quality, the location area update procedure is triggered even if the tag values do not vary, so as to balance reduction of the frequency of location area updates and stability of the communication quality.

Case 3: the comparison result is that there is no overlapped location area between the total location area list of the target cell and the location area list of the current cell and the tag value of the current cell is the same as that of the target cell, and the moving distance value of the terminal from the target time when the terminal is in the idle state last time to the current time does not exceed the critical distance value, then the location area update procedure is not triggered.

In a case where the cell reselection occurs and there is no overlapped location area between the location area list of the cell before reselection and the location area list of the cell after reselection, if the moving distance value of the terminal from the target time when the terminal is in the idle state last time to the current time does not exceed the critical distance value, the location area update procedure is not triggered under the condition that the tag values do not vary, so as to balance the reduction of the frequency of location area updates and the stability of the communication quality, thereby reducing the frequency of location area updates as much as possible in a case where it is determined based on the moving distance that the communication quality can be ensured.

Case 4: the comparison result is that there is no overlapped location area between the total location area list of the target cell and the location area list of the current cell and the tag value of the current cell is not the same as that of the target cell, then the location area update procedure is triggered.

In a case where the cell reselection occurs and there is no overlapped location area between the location area list of the cell before reselection and the location area list of the cell after reselection, the location area update procedure is triggered under the condition that the tag values vary, so as to ensure the communication quality.

Case 5: the comparison result is that there is the overlapped location area between the total location area list of the target cell and the location area list of the current cell and the tag value of the current cell is not the same as that of the target cell, then the location area update procedure is not triggered.

In a case where the cell reselection occurs and there is the overlapped location area between the location area list of the cell before reselection and the location area list of the cell after reselection, even if the tag value before reselection and the tag value after reselection vary, the location area update procedure is not triggered, which reduces the frequency of location area updates.

Case 6: the comparison result is that there is the overlapped location area between the total location area list of the target cell and the location area list of the current cell and the tag value of the current cell is the same as that of the target cell, then the location area update procedure is not triggered.

In a case where the cell reselection occurs and there is the overlapped location area between the location area list of the cell before reselection and the location area list of the cell after reselection, under the condition that the tag value before reselection and the tag value after reselection do not vary, the location area update procedure is not triggered, which reduces the frequency of location area updates.

In some embodiments, for Case 2 and Case 3, a process of obtaining, by the terminal, the moving distance value of the terminal from the target time when the terminal is in the idle state last time to the current time includes: acquiring information of a first position where the terminal is located at the current time, and acquiring information of a second position where the terminal is located at the target time when the terminal is in the idle state last time from a record; and determining a distance value between the first position and the second position based on the information of the first position and the information of the second position, and taking the distance value as the moving distance value of the terminal from the target time when the terminal is in the idle state last time to the current time.

It should be noted that, under a condition that the terminal can be accurately positioned, the terminal can acquire the accurate information of the first position and the second position and then further obtain the relatively accurate moving distance value, and when the moving distance value does not exceed the critical distance value, it is indicated that the actual moving distance of the terminal is short and no substantial location area change occurs, so that the location area update procedure does not need to be triggered; on the contrary, when the moving distance value exceeds the critical distance value, it is indicated that the actual moving distance of the terminal is long and a substantial location area change occurs, so that the location area update procedure needs to be triggered. Under the condition that the terminal cannot be accurately positioned, the operation of determining whether to trigger the location area update procedure based on the moving distance value may not be adopted.

Various positioning techniques may be adopted to position the terminal, for example, a Global Positioning System (GPS) equipped with the terminal is adopted to determine the positions of the terminal. The adopted positioning method is not limited herein, and any positioning technique capable of accurately determining the position of the terminal and informing the terminal of the position thereof in time may be applied to the embodiments of the present disclosure.

It should be noted that the cell reselection in the embodiments of the present disclosure refers to a handover of the terminal from one cell to another cell as a resident cell, and a process of the cell reselection and the location area update procedure are two different processes.

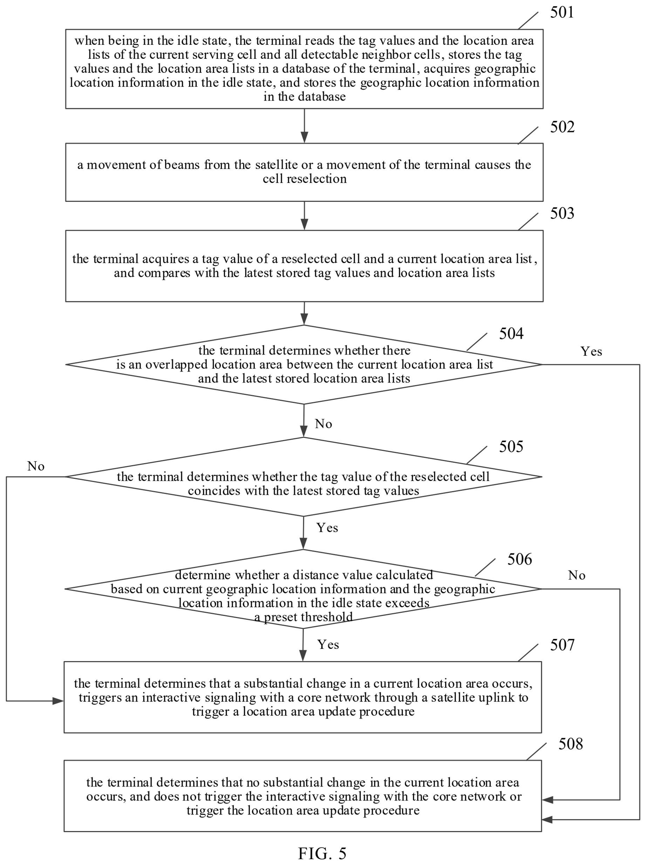

In an exemplary embodiment, FIG. 5 is a flowchart illustrating a method for triggering the location area update by the terminal, which specifically includes the following operations 501 to 508.

At operation 501, when being in the idle state, the terminal reads the tag values and the location area lists of the current serving cell and all detectable neighbor cells, stores the tag values and the location area lists in a database of the terminal, acquires geographic location information in the idle state, and stores the geographic location information in the database.

At operation 502, a movement of beams from the satellite or a movement of the terminal causes a cell reselection.

At operation 503, the terminal acquires a tag value of a reselected cell and a current location area list, and compares with the latest stored tag values and location area lists.

At operation 504, the terminal determines whether there is an overlapped location area between the current location area list and the latest stored location area lists, and if there is no overlapped location area between the current location area list and the latest stored location area lists, operation 505 is performed; and if there is the overlapped location area between the current location area list and the latest stored location area lists, operation 508 is performed.

At operation 505, the terminal determines whether the tag value of the reselected cell coincides with the latest stored tag values, and if the tag value of the reselected cell coincides with the latest stored tag values, operation 506 is performed; and if the tag value of the reselected cell does not coincide with the latest stored tag values, operation 507 is performed.

At operation 506, the terminal further determines whether a distance value calculated based on current geographic location information and the geographic location information in the idle state exceeds a preset threshold, and if the distance value exceeds the preset threshold, operation 507 is performed; and if the distance value does not exceed the preset threshold, operation 508 is performed.

At operation 507, the terminal determines that a substantial change in a current location area occurs, triggers an interactive signaling with a core network through a satellite uplink to trigger a location area update procedure, and ends the flow.

At operation 508, the terminal determines that no substantial change in the current location area occurs, and does not trigger the interactive signaling with the core network or trigger the location area update procedure.

At operation 501, acquiring and storing the geographic location information in the idle state is an optional operation, and the operation of storing the geographic location information is performed under the condition that the terminal can accurately acquire the current geographic location information. Accordingly, in a case where the terminal does not store the current geographic location information, the further determination at operation 506 does not need to be performed, and operation 508 may be directly performed if the tag value of the reselected cell coincides with the latest stored tag values, resulting in not triggering the location area update procedure.

In the embodiments of the present disclosure, the mapping relationship between the location area lists and the tag values of the cells is stored in the location area mapping relationship, and whether to trigger the location area update procedure is determined based on the change in the tag values and the change in the location area lists. In this way, even if the cell reselection occurs and causes the change in the location area lists, the signaling interaction process for the location area update is not necessarily triggered under the control of the tag values, controllable parameters are provided for reduction of the frequency of the triggering of the location area update, and a possibility of reducing unnecessary signaling interaction processes and reducing signaling overheads caused by the location area update is provided, the cell reselection is no longer the only necessary condition for triggering the location area update, and the signaling interaction process for the location area update is not necessarily triggered even if the cell reselection occurs and the reselected location area is not in the location area list of the cell previously providing services, so that the frequency of the triggering of the location area update is reduced to a great extent, and the unnecessary signaling interaction processes are reduced.

An embodiment of the present disclosure further provides a location area update method, which is applied to an NTN such as a satellite which provides communication services for a terminal.

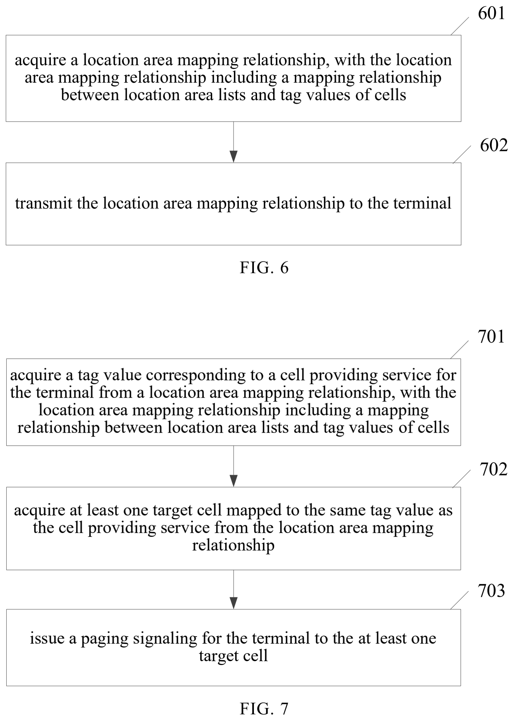

FIG. 6 is a flowchart illustrating a location area update method applied to an NTN such as a satellite, which includes the following operations 601 and 602.

At operation 601, a location area mapping relationship is acquired, with the location area mapping relationship including a mapping relationship between location area lists and tag values of cells.

In some embodiments, acquiring the location area mapping relationship (i.e., operation 601) includes: acquiring the location area mapping relationship sent by a core network, and the location area mapping relationship is generated in the following way: the core network acquires a current location area list of each cell and a tag value corresponding to the location area list, and establishes the location area mapping relationship based on the cells, the current location area lists of the cells, and the tag values corresponding to the location area lists.

The core network may be triggered to perform a location area update under various conditions, for example, the NTN sends a location area update request to the core network after receiving a location area update request sent by the terminal; or the core network updates the location area mapping relationship when monitoring that a location area update condition is met, and then issues the updated the location area mapping relationship to the terminal through the NTN. Reference may be made to the conditions for the terminal to trigger the location area update according to the embodiments of the present disclosure for a triggering condition for the terminal to send the location area update request, and the triggering condition will not be repeated here.

The location area list includes at least one location area, and the location area list of the cell includes each location area within coverage of the cell.

The core network acquiring the current location area list of each cell may specifically include: re-detecting a geographic coordinate range covered by each cell; and comparing a geographic coordinate range of each location area with the geographic coordinate range covered by the cell to obtain a location area having the geographic coordinate range overlapping the geographic coordinate range covered by the cell, thereby obtaining the current location area list of the cell.

At operation 602, the location area mapping relationship is transmitted to the terminal.

In this embodiment, the NTN transmits the location area mapping relationship to the terminal, so that the terminal may determine whether to trigger a location area update procedure based on the location area mapping relationship, the frequency of the triggering of the location area update is reduced to a great extent, and the unnecessary signaling interaction processes are reduced.

Based on the above location area update method and method for triggering the location area update, an embodiment of the present disclosure further provides a paging method applied to an NTN providing communication services for a terminal.

FIG. 7 is a flowchart illustrating a terminal paging method applied to an NTN, which includes the following operations 701 to 703.

At operation 701, a tag value corresponding to a cell providing services for the terminal is acquired from a location area mapping relationship, with the location area mapping relationship including a mapping relationship between location area lists and tag values of cells.

The cell providing services for the terminal refers to a cell on which the terminal resides when the terminal initiates a location area update last time.

At operation 702, at least one target cell mapped to the same tag value as the cell providing services is acquired from the location area mapping relationship.

At operation 703, a paging signaling for the terminal is issued to the at least one target cell.

In some embodiments, the NTN first performs paging on the cell providing services and an associated cell which is a cell having an overlapped location area with the cell providing services. After the paging fails, the NTN issues the paging signaling for the terminal to the at least one target cell having a location tag the same as that of the cell providing services so as to page the terminal again, and the paging succeeds. If the paging performed on the cell providing services and the associated cell succeeds, the whole service process is established successfully.

In the embodiments of the present disclosure, when paging the terminal, the NTN providing communication services for the terminal performs the paging at most twice using the cells with different geographic ranges, that is, using two groups of cells each including at least one cell and mapped to the same tag value, thereby ensuring that the terminal can be paged successfully as long as the terminal is in a service area.

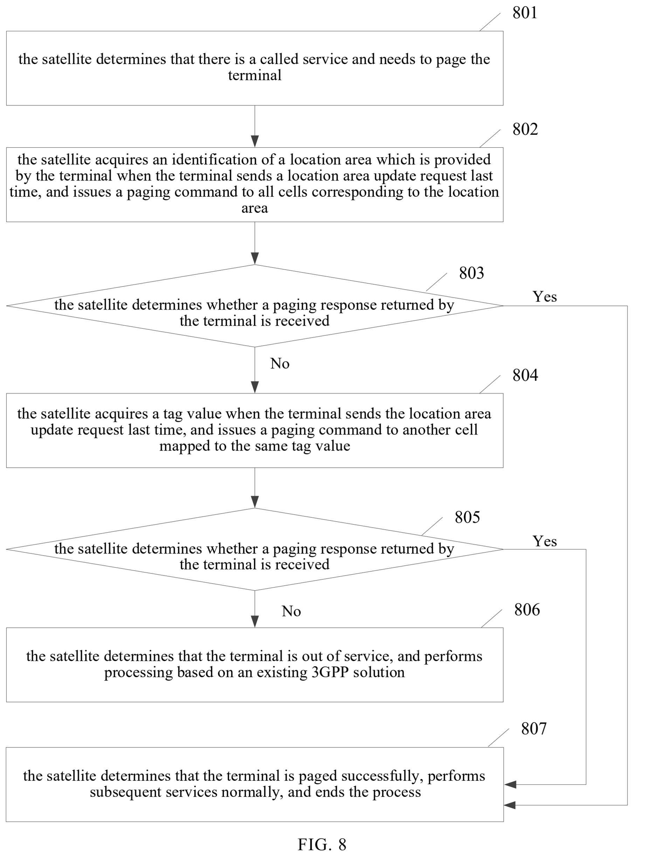

In an exemplary embodiment, FIG. 8 is a flowchart of a satellite paging the terminal, which includes operations 801 to 807.

At operation 801, the satellite determines that there is a called service and needs to page the terminal.

At operation 802, the satellite acquires an identification of a location area which is provided by the terminal when the terminal sends a location area update request last time, and issues paging commands to all cells corresponding to the location area.

At operation 803, the satellite determines whether a paging response returned by the terminal is received, and if no paging response returned by the terminal is received, operation 804 is performed; and if the paging response returned by the terminal is received, operation 807 is performed.

At operation 804, the satellite acquires a tag value when the terminal sends the location area update request last time, and issues a paging command to another cell mapped to the same tag value, with the another cell being at least one cell other than the cells to which the paging commands are issued at operation 802.

At operation 805, the satellite determines whether a paging response returned by the terminal is received, and if no paging response returned by the terminal is received, operation 806 is performed; and if the paging response returned by the terminal is received, operation 807 is performed.

At operation 806, the satellite determines that the terminal is out of service, performs processing based on an existing 3GPP solution, and ends the process.

At operation 807, the satellite determines that the terminal is paged successfully, performs subsequent services normally, and ends the process.

An establishment method of the location area mapping relationship and the process of triggering the location area update described in the above embodiments are illustrated below by a specific example.

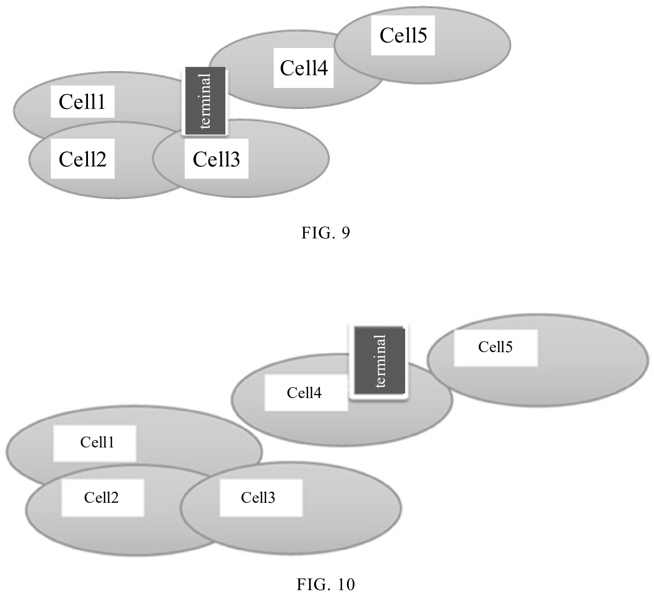

Assuming that there are five cells, FIG. 9 is a schematic diagram illustrating a position of a terminal during a time T1. The mapping relationship among the cells, the location area lists, and the tag values in the location area mapping relationship is as shown in Table 1. In the mapping relationship, Cell 1, Cell 2, and Cell 3 are mapped to the same tag value "1111", and Cell 4 and Cell 5 are mapped to the same tag value "2222". In this example, a general principle of deployment of the tag values is as follows: a cluster formed by several cells that are overlapped in a current area or have overlapped signal coverage ranges or have heavily overlapped signal coverage ranges are configured with a same tag value. Referring to FIG. 9, an intersection of Cell 1, Cell 2, and Cell 3 has a large area, and signal coverage areas of Cell 1, Cell 2, and Cell 3 overlap with each other, so that Cell 1, Cell 2, and Cell 3 are configured with the same tag value "1111". Cell 4 does not overlap Cell 1, Cell 2, and Cell 3 obviously, so that Cell 4 is configured with the tag value "2222". Cell 5 and Cell 4 overlap with each other obviously, so that Cell 5 and Cell 4 are configured with the same tag value.

Certainly, this is just an example, and a plurality of cells configured with a same tag value in practical applications may not necessarily overlap, and whether the cells overlap is not a necessary condition for configuring the same tag value.

A broadcast location area list is a location area list of each cell acquired in a latest location area update (see the related description of the location area update method according to the embodiments of the present disclosure).

As shown in Table 1, the current location area list of each cell is acquired in the latest location area update, and the tag value corresponding to the location area list of each cell is acquired.

A location area where the terminal is actually located at a time T1 is close to a junction of Cell 1, Cell 2, and Cell 3, and for Cell 1 to Cell 5, the terminal can detect Cell 1, Cell 2, Cell 3, and Cell 4, but cannot detect Cell 5. The terminal records the parameters as shown in Table 1, and stores the parameters in a database. If the geographic location information obtained through accurately positioning by a GPS of the terminal is available at this time, the obtained geographic location information may also be synchronously stored in the database. When the accurately positioning by the GPS is unavailable, the operation of determining whether to trigger the location area update by calculating the moving distance value based on the geographic location information is cancelled.

**Table 1 Cell Information Corresponding to Time T1**

| cell number | tag value | broadcast location area list | actual location area of terminal | whether the cell can be detected by the terminal as a neighbor cell |
|---|---|---|---|---|
| Cell 1 | 1111 | (1, 2) | close to the junction of Cell 1, Cell 2, and Cell 3 | Y |
| Cell 2 | 1111 | (2, 3) | | Y |
| Cell 3 | 1111 | (4) | | Y |
| Cell 4 | 2222 | (12, 13) | | Y |
| Cell 5 | 2222 | (14, 15) | | N |

The terminal may be caused to perform reselection on the cells due to a movement of the satellite providing communication services for the terminal or a slight movement of the terminal. Assuming that the position of the terminal does not change significantly within a period of time, that is, at this time, the moving distance value calculated based on the geographic location coordinates of the terminal obtained by positioning before and after the reselection does not exceed a preset threshold, the location area update procedure is not triggered according to the solutions provided in the embodiments of the present disclosure no matter whether the cell reselection is performed. However, when the cell reselection is performed based on the solutions in the related technology, the location area update procedure is triggered if the location area lists do not overlap due to the cell reselection. An implementation effect of the solutions provided in the embodiments of the present disclosure is compared with that of the solutions in the related technology with reference to Table 3.

At a time T2, the terminal experiences a significant movement. At this time, it is assumed that the moving distance value of the terminal exceeds the preset threshold and the terminal moves close to a junction of Cell 4 and Cell 5. FIG. 10 is a schematic diagram illustrating the position of the terminal at the time T2, and the cell information corresponding to the time T2 is shown in Table 2.

**Table 2 Cell Information Corresponding to Time T2**

| cell number | tag value | broadcast location area list | actual location area of terminal | whether the cell can be detected by the terminal as a neighbor cell |
|---|---|---|---|---|
| Cell 1 | 1111 | (1, 2) | close to the junction of Cell 4 and Cell 5 | N |
| Cell 2 | 1111 | (2, 3) | | N |
| Cell 3 | 1111 | (4) | | N |
| Cell 4 | 2222 | (12, 13) | | Y |
| Cell 5 | 2222 | (14, 15) | | Y |

The situations of triggering of the location area update by various movement conditions of the terminal are counted. Table 3 illustrates the comparison between the implementation effect of the solutions provided in the embodiments of the present disclosure and the implementation effect of the solutions in the related technology. As can be seen from the second row, the third row, and the last row, the solutions provided in the embodiments of the present disclosure do not need to trigger the location area update procedure while the conventional solutions need to trigger the location area update procedure. Thus, the method for triggering the location area update provided in the embodiments of the present disclosure can significantly reduce the frequency of location area updates.

**Table 3 Comparison between Implementation Effect of Solutions Provided in Embodiments of Present Disclosure and Implementation Effect of Technical Solutions**

| cell reselection | whether tag values are consistent | whether there is overlapped clement in location area lists have | whether moving distance of terminal exceeds threshold | whether solutions herein trigger location area update procedure | whether conventional solutions trigger location area update procedure |
|---|---|---|---|---|---|
| Cell 1<-->Cell 2 | Y | Y | N | N | N |
| Cell 1<-->Cell 3 | Y | N | N | N | Y |
| Cell 2<-->Cell 3 | Y | N | N | N | Y |
| Cell 1<-->Cell 4 | N | N | N | Y | Y |
| Cell 2<-->Cell 4 | N | N | N | Y | Y |
| Cell 3<-->Cell 4 | N | N | Y | Y | Y |
| Cell 4<-->-Cell 5 | Y | N | N | N | Y |

A worst scenario is given for the completion of a paging procedure at the network side: assuming that the terminal initiates the location area update procedure in Cell 1, the core network stores the tag value "1111" of Cell 1 and the location area list (1, 2) at this time; and assuming that the terminal is switched to Cell 3 from Cell 1 through the reselection, the location area update procedure is not triggered with the method for triggering the location area update provided in the embodiments of the present disclosure, when paging the terminal, the network side first issues the paging commands to Cell 1 and Cell 2, which have the location area lists including at least one location area of (1, 2), using the tag value Tag=1111; the network side continues to initiate paging to another cell to which the tag value Tag=1111 is mapped, i.e., Cell 3, if no response is received within a specific time; the terminal responds normally at this time because the terminal is in Cell 3, and the whole communication process is completed successfully.

As can be seen, through the cooperation with the method for triggering the location area update provided in the embodiments of the present disclosure, the paging method provided in the embodiments of the present disclosure reduces unnecessary location area update procedures on the basis of properly sacrificing a certain paging delay, avoids the repeated wake-up of the terminal, and can reduce the power consumption of the terminal while reducing the signaling overheads of the NTN and the core network.

With on need to change hardware environment of a terminal and a network side of 5G or 6G, the method for triggering the location area update, the location area update method, and the paging method provided in the embodiments of the present disclosure can be implemented just by software, and can reduce the frequency of location area updates, ensure the paging success rate, and reduce the power consumption of the terminal and the signaling overheads of the communication network.

The method for triggering the location area update provided in the embodiments of the present disclosure can be implemented in a baseband chip of the terminal.

The above division of the operations of the methods is just for clarity of description, and when the operations are implemented, the operations may be combined into one operation, or a certain operation may be divided into a plurality of operations. As long as the implementations of the operations include the same logical relationship, the implementations of the operations are all within the scope of the present disclosure. For insignificant modifications added to or insignificant designs introduced to algorithms or processes, the insignificant modifications and the insignificant designs are all within the scope of the present disclosure as long as the insignificant modifications and the insignificant designs do not change to the core designs of the algorithms or processes.

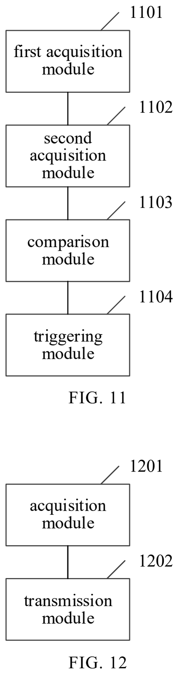

An embodiment of the present disclosure further provides an apparatus for triggering a location area update, which is applied to a terminal, and an NTN provides communication services for the terminal. A specific implementation of the apparatus may be found in the related description of the method for triggering the location area update according to the embodiments of the present disclosure, and will not be repeated here. FIG. 11 is a schematic structural diagram of the apparatus, which includes a first acquisition module 1101, a second acquisition module 1102, a comparison module 1103, and a triggering module 1104.

The first acquisition module 1101 is configured to acquire a tag value of a target cell, a tag value of a current cell, and a location area list of the current cell from a location area mapping relationship, with the target cell being a cell on which the terminal resides when the terminal is in an idle state last time, and the location area mapping relationship including a mapping relationship between location area lists and tag values of cells.

The second acquisition module 1102 is configured to acquire a total location area list stored corresponding to the target cell, with the total location area list acquired through detecting when the terminal is in the idle state last time.

The comparison module 1103 is configured to obtain a comparison result by comparing the total location area list with the location area list of the current cell, and comparing the tag value of the current cell with the tag value of the target cell.

The triggering module 1104 is configured to determine whether to trigger a location area update procedure based on the comparison result.

An embodiment of the present disclosure further provides a location area update apparatus, which is applied to an NTN providing communication services for a terminal. A specific implementation of the apparatus may be found in the related description of the location area update method according to the embodiments of the present disclosure, and will not be repeated here. FIG. 12 is a schematic structural diagram of the apparatus, which includes: an acquisition module 1201 and a transmission module 1202.

The acquisition module 1201 is configured to acquire a location area mapping relationship, with the location area mapping relationship including a mapping relationship between location area lists and tag values of cells.

The transmission module 1202 is configured to transmit the location area mapping relationship to the terminal.

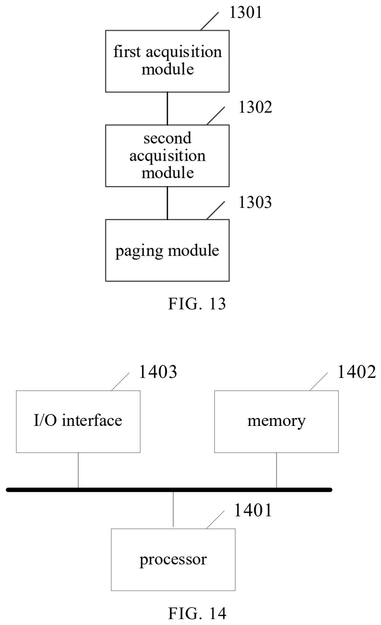

An embodiment of the present disclosure further provides a paging apparatus, which is applied to an NTN providing communication services for a terminal. A specific implementation of the apparatus may be found in the related description of the paging method according to the embodiments of the present disclosure, and will not be repeated here. FIG. 13 is a schematic structural diagram of the apparatus, which includes: a first acquisition module 1301, a second acquisition module 1302, and a paging module 1303.

The first acquisition module 1301 is configured to acquire a tag value corresponding to a cell providing services for the terminal from a location area mapping relationship, with the location area mapping relationship including a mapping relationship between location area lists and tag values of cells.

The second acquisition module 1302 is configured to acquire at least one target cell mapped to the same tag value as the cell providing services from the location area mapping relationship.

The paging module 1303 is configured to issue a paging signaling for the terminal to the at least one target cell.

The functions of or the modules included in each apparatus provided in the embodiments of the present disclosure can be used to perform the method described in each embodiment of the present disclosure, and specific implementations and technical effects of the functions or the modules may be found in the description of the above method embodiments, and will not be repeated here for conciseness.

It should be noted that each module in this implementation is a logic module, and in practical applications, one logical unit may be one physical unit or a part of one physical unit, and may also be implemented as a combination of a plurality of physical units. In addition, in order to highlight the innovative part of the present disclosure, a unit not so closely related to the solution to the technical problem proposed by the present disclosure is not introduced in this implementation, but this does not mean that no other unit is provided in this implementation.

Referring to FIG. 14, an embodiment of the present disclosure further provides an electronic device, including: one or more processors 1401; and a memory 1402 having stored thereon one or more programs which, when executed by the one or more processors, cause the one or more processors to perform the method according to each embodiment of the present disclosure.

In addition, the electronic device may further include one or more Input/Output (I/O) interfaces 1403 connected between the one or more processors 1401 and the memory 1402 and configured to enable information interaction between the one or more processors 1401 and the memory 1402.

The processor 1401 is a device having a data processing capability, and includes, but is not limited to, a Central Processing Unit (CPU); the memory 1402 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 1403 is connected between the processor 1401 and the memory 1402, is capable of enabling the information interaction between the processor 1401 and the memory 1402, and includes, but is not limited to, a data bus (Bus).

In some embodiments, the processor 1401, the memory 1402, and the I/O interface 1403 are connected to each other through a bus, and then are connected to other components of a computing device.

An embodiment of the present disclosure further provides a computer storage medium having stored thereon a computer program which, when executed by a processor, causes the processor to perform the method according to each embodiment of the present disclosure. In order to avoid repeated description, the detailed operations of each method will not be repeated herein.

It should be understood by those of ordinary skill in the art that the functional modules/units in all or some of the operations, the systems and the devices in the methods disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

It should be noted that the terms "include", "comprise" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including a..." does not exclude the existence of other identical elements in the process, method, article, or device which includes the element.

It should be understood by those of ordinary skill in the art that, although some embodiments described herein include some features, but not other features, included in other embodiments, the combinations of the features of different embodiments are intended to fall within the scope of the present disclosure and form different embodiments.

It should be understood that the above implementations are merely exemplary implementations adopted to illustrate the principle of the present disclosure, and the present disclosure is not limited thereto. Various modifications and improvements can be made by those of ordinary sill in the art without departing from the spirit and essence of the present disclosure, and those modifications and improvements are also considered to fall within the scope of the present disclosure.

## Claims

1. A method for triggering a location area update applied to a terminal, a non-terrestrial network providing communication services for the terminal, and the method comprising:
acquiring a tag value of a target cell, a tag value of a current cell, and a location area list of the current cell from a location area mapping relationship, wherein the target cell is a cell on which the terminal resides when the terminal is in an idle state last time, and the location area mapping relationship comprises a mapping relationship between location area lists and tag values of cells;
acquiring a total location area list stored corresponding to the target cell, wherein the total location area list is acquired through detecting when the terminal is in the idle state last time;
obtaining a comparison result by comparing the total location area list with the location area list of the current cell, and comparing the tag value of the current cell with the tag value of the target cell; and
determining whether to trigger a location area update procedure based on the comparison result.

2. The method for triggering the location area update of claim 1, wherein before acquiring the tag value of the target cell, the tag value of the current cell, and the location area list of the current cell from the location area mapping relationship, the method further comprises:
acquiring the location area mapping relationship issued by the non-terrestrial network after a latest location area update.

3. The method for triggering the location area update of claim 1, wherein determining whether to trigger the location area update procedure based on the comparison result comprises:
in a case where the comparison result is that there is no overlapped location area between the total location area list and the location area list of the current cell and the tag value of the current cell is the same as the tag value of the target cell, not triggering the location area update procedure.

4. The method for triggering the location area update of claim 1, wherein determining whether to trigger the location area update procedure based on the comparison result comprises:
in a case where the comparison result is that there is no overlapped location area between the total location area list and the location area list of the current cell and the tag value of the current cell is the same as the tag value of the target cell, and a moving distance value of the terminal from a target time when the terminal is in the idle state last time to a current time exceeds a critical distance value, triggering the location area update procedure.

5. The method for triggering the location area update of claim 1, wherein determining whether to trigger the location area update procedure based on the comparison result comprises:
in a case where the comparison result is that there is no overlapped location area between the total location area list and the location area list of the current cell and the tag value of the current cell is the same as the tag value of the target cell, and a moving distance value of the terminal from a target time when the terminal is in the idle state last time to a current time does not exceed a critical distance value, not triggering the location area update procedure.

6. The method for triggering the location area update of claim 1, wherein determining whether to trigger the location area update procedure based on the comparison result comprises:
in a case where the comparison result is that there is no overlapped location area between the total location area list and the location area list of the current cell and the tag value of the current cell is not the same as the tag value of the target cell, triggering the location area update procedure.

7. The method for triggering the location area update of claim 1, wherein determining whether to trigger the location area update procedure based on the comparison result comprises:
in a case where the comparison result is that there is an overlapped location area between the total location area list and the location area list of the current cell and the tag value of the current cell is not the same as the tag value of the target cell, not triggering the location area update procedure.

8. The method for triggering the location area update of claim 1, wherein determining whether to trigger the location area update procedure based on the comparison result comprises:
in a case where the comparison result is that there is an overlapped location area between the total location area list and the location area list of the current cell and the tag value of the current cell is the same as the tag value of the target cell, not triggering the location area update procedure.

9. The method for triggering the location area update of claim 1, wherein the total location area list comprises a location area list of the target cell detected when the terminal is in the idle state last time and a location area list of a neighbor cell.

10. A location area update method applied to a non-terrestrial network, the non-terrestrial network providing communication services for a terminal, and the method comprising:
acquiring a location area mapping relationship, wherein the location area mapping relationship comprises a mapping relationship between location area lists and tag values of cells; and
transmitting the location area mapping relationship to the terminal.

11. The location area update method of claim 10, wherein acquiring the location area mapping relationship comprises:
acquiring the location area mapping relationship sent by a core network,
wherein the core network acquires a current location area list of each cell and a tag value corresponding to the location area list, and establishes the location area mapping relationship based on the cells, the current location area lists of the cells, and the tag values corresponding to the location area lists.

12. A paging method applied to a non-terrestrial network, the non-terrestrial network providing communication services for a terminal, and the method comprising:
acquiring a tag value corresponding to a cell providing services for the terminal from a location area mapping relationship, wherein the location area mapping relationship comprises a mapping relationship between location area lists and tag values of cells;
acquiring at least one target cell mapped to the same tag value as the cell providing services from the location area mapping relationship; and
issuing a paging signaling for the terminal to the at least one target cell.

13. An apparatus for triggering a location area update applied to a terminal, a non-terrestrial network providing communication services for the terminal, and the apparatus comprising:
a first acquisition module configured to acquire a tag value of a target cell, a tag value of a current cell, and a location area list of the current cell from a location area mapping relationship, wherein the target cell is a cell on which the terminal resides when the terminal is in an idle state last time, and the location area mapping relationship comprises a mapping relationship between location area lists and tag values of cells;
a second acquisition module configured to acquire a total location area list stored corresponding to the target cell, wherein the total location area list is acquired through detecting when the terminal is in the idle state last time;
a comparison module configured to obtain a comparison result by comparing the total location area list with the location area list of the current cell, and comparing the tag value of the current cell with the tag value of the target cell; and
a triggering module configured to determine whether to trigger a location area update procedure based on the comparison result.

14. A location area update apparatus applied to a non-terrestrial network providing communication services for a terminal, comprising:
an acquisition module configured to acquire a location area mapping relationship, wherein the location area mapping relationship comprises a mapping relationship between location area lists and tag values of cells; and
a transmission module configured to transmit the location area mapping relationship to the terminal.

15. A paging apparatus applied to a non-terrestrial network providing communication services for a terminal, comprising:
a first acquisition module configured to acquire a tag value corresponding to a cell providing services for the terminal from a location area mapping relationship, wherein the location area mapping relationship comprises a mapping relationship between location area lists and tag values of cells;
a second acquisition module configured to acquire at least one target cell mapped to the same tag value as the cell providing services from the location area mapping relationship; and
a paging module configured to issue a paging signaling for the terminal to the at least one target cell.

16. An electronic device, comprising:
at least one processor; and
a memory having stored thereon at least one program which, when executed by the at least one processor, causes the at least one processor to perform the method for triggering the location area update of any one of claims 1 to 9, or
perform the location area update method of claim 10 or 11, or
perform the paging method of claim 12.

17. A computer readable medium having stored thereon a computer program which, when executed by a processor, causes the processor to perform the method for triggering the location area update of any one of claims 1 to 9, or
perform the location area update method of claim 10 or 11, or perform the paging method of claim 12.
